# FASCICULE DE BREVET EUROPEEN

(11) **EP 1 411 620 B1**
(45) Date de publication et mention de la délivrance du brevet: **08.08.2012**
(21) Numéro de dépôt: 03292568.7
(22) Date de dépôt: 15.10.2003
(51) Int. Cl.: H02K 7/10, H02K 1/27, H02K 5/10

(54) **Machine comportant une poulie et un moteur électrique, notamment pour ascenseur**
Maschine mit Elektromotor und Scheibe, insbesondere für einen Aufzug
Machine having an electric motor and a pulley, in particular for an elevator

(30) Priorité: 18.10.2002 FR 0212979
(43) Date de publication de la demande: 21.04.2004
(73) Titulaire: MOTEURS LEROY-SOMER, 16000 Angoulême (FR)
(72) Inventeur: Gauthier, Pascal, 16290 Asnieres-sur-Nouere (FR); Gilles, Christophe, 16000 Angouleme (FR); Beynaud, Pascal, 16290 Saint-Saturnin (FR)
(74) Mandataire: Tanty, François

(56) Documents cités:
- EP-A1- 0 834 463
- DE-C- 19 903 409
- US-A1- 2002 053 838
- PATENT ABSTRACTS OF JAPAN vol. 1999, no. 02, 26 février 1999 (1999-02-26) & JP 10 304641 A (HITACHI LTD), 13 novembre 1998 (1998-11-13)
- PATENT ABSTRACTS OF JAPAN vol. 2000, no. 23, 10 février 2001 (2001-02-10) & JP 2001 151443 A (TOSHIBA DIGITAL MEDIA ENGINEERING CORP;TOSHIBA CORP), 5 juin 2001 (2001-06-05)

## Description

La présente invention concerne les machines pour l'entraînement d'au moins un câble, notamment d'ascenseur.

L'encombrement, notamment axial, de ces machines est un facteur déterminant pour le coût de l'installation des ascenseurs.

Le brevet US 4,960,186 décrit une machine dans laquelle la poulie est fixée sur une paroi d'extrémité du rotor, ce qui permet l'utilisation d'une poulie ayant un diamètre moins élevé que celui du rotor.

Pour diminuer l'encombrement axial, des machines à rotor discoïde ont été proposées, dans le brevet US 5,996,742 notamment.

Le brevet US 4,771,197 décrit une machine dans laquelle les gorges de la poulie sont réalisées autour du rotor. La demande EP 0 834 463 décrit une poulie d'ascenseur en forme de cloche logeant un moteur, un frein étant fixé à la paroi arrière du carter du moteur. Le brevet européen EP 0 706 968 et le brevet allemand DE 199 03 409 et les demandes de brevet JP2001-151443, JP10304641 et US2002/0053838 décrivent d'autres machines encore.

L'invention vise à proposer une machine qui soit relativement compacte tout en offrant des performances mécaniques et électriques la rendant adaptée à l'entraînement d'un ascenseur.

La machine selon l'invention est caractérisée dans la revendication 1 et comporte ainsi ;
- un moteur comportant :
   - un stator bobiné sur dents,
   - un rotor autour du stator, ce rotor comportant une enveloppe tubulaire et des aimants permanents, et
- une poulie accouplée au rotor.

Par « stator », on désigne l'ensemble comportant les tôles et les bobinages de la partie électrique fixe de la machine.

L'expression « bobiné sur dents » est synonyme de l'expression anglosaxone « concentrated winding ».

Avantageusement, la poulie vient recouvrir partiellement le stator, notamment les têtes des bobinages du stator.

Grâce à l'invention, la machine peut être réalisée avec un faible encombrement axial notamment.

L'enveloppe tubulaire du rotor comporte de préférence un paquet de tôles superposées. Ce paquet de tôles peut avantageusement être maintenu en compression par des éléments de fixation, tels que des vis par exemple, qui sont fixés dans la poulie. Cette disposition permet d'utiliser les éléments de fixation à la fois pour la fixation du rotor sur la poulie et pour assurer la cohésion du paquet de tôles du rotor.

La poulie peut comporter une partie périphérique sur laquelle sont réalisées des gorges destinées à accueillir les câbles et une partie de réception des éléments de fixation du rotor, cette partie étant réalisée d'une seule pièce avec la partie périphérique, par moulage de matière ou usinage par exemple. La partie de réception des éléments de fixation du rotor peut recouvrir les têtes des bobinages du stator sans recouvrir les dents du stator. Cela peut permettre l'utilisation, pour réaliser la poulie, d'un matériau massif conducteur de l'électricité sans pour autant générer des pertes importantes par courants induits.

La poulie peut avantageusement comporter des passages permettant une circulation d'air à travers elle, ce qui peut permettre d'éviter l'utilisation d'un ventilateur spécifique entraîné par l'arbre de la machine.

Le flux d'air peut balayer à la fois le stator et un disque de frein.

La machine peut comporter un bandeau recouvrant une extrémité axiale libre du rotor, opposée à la poulie.

La machine comporte au moins un frein de parking.

La machine peut ne pas être fixée en porte-à-faux par une extrémité.

La machine peut comporter deux roulements, notamment de part et d'autre à la fois de la poulie et du rotor, de préférence de part et d'autre à la fois des gorges de la poulie et des aimants du rotor, sur lesquels reposent les extrémités axiales d'un arbre du rotor. La machine peut ne comporter que deux roulements.

La machine peut encore comporter un capteur, notamment optique, du nombre de tours de la poulie et/ou du rotor autour de l'axe.

La poulie est reliée à une extrémité opposée au stator à une couronne destinée à coopérer avec les mâchoires du frein.

Est encore décrit une machine d'entraînement d'au moins un câble, notamment d'ascenseur, comportant une poulie et un moteur électrique comportant un stator et un électrique comportant un stator et un rotor accouplé à la poulie, ce rotor pouvant tourner autour du stator et comportant des aimants permanents présents sur une face intérieure d'une enveloppe tubulaire directement fixée par une extrémité sur la poulie.

Est encore décrit une machine d'entraînement d'au moins un câble, notamment d'ascenseur, comportant :
- un moteur comportant :
   - un stator,
   - un rotor autour du stator, ce rotor comportant une enveloppe tubulaire et des aimants permanents, et
   - une poulie accouplée au rotor et venant partiellement recouvrir le stator.

L'invention a encore pour objet l'utilisation d'une machine telle que définie plus haut, pour l'entraînement d'un ascenseur.

L'invention pourra être mieux comprise à la lecture de la description détaillée qui va suivre, d'un exemple de réalisation donné à titre non limitatif de celle-ci, et à l'examen du dessin annexé, sur lequel :
- la figure 1 est une vue schématique, en perspective, d'un exemple de machine réalisée conformément à l'invention,
- la figure 2 est une coupe axiale, schématique et partielle, de la machine de la figure 1,
- la figure 3 est une demi-coupe axiale, schématique, selon III-III de la figure 2, et
- la figure 4 est une coupe transversale de la machine de la figure 1.

La machine 10 représentée sur les figures comporte une poulie 20 et un moteur 30 pour entraîner la poulie 20 en rotation autour d'un axe géométrique de rotation X.

Le moteur 30 comporte un stator 31 comportant un paquet de tôles 32 superposées, ce paquet définissant des dents 33 sur lesquelles sont engagées des bobines respectives 34. Les tôles 32 sont en un matériau magnétique et sont isolées, par exemple avec du vernis, avant d'être assemblées, de façon conventionnelle.

Le stator 31 est supporté par une première paroi d'extrémité 36 qui s'étend perpendiculairement à l'axe X et qui repose sur des longerons 37 servant à la fixation de la machine sur son support.

Les tôles 32 sont engagées sur un guide 38, d'axe X, qui est fixé à une extrémité sur la première paroi 36 et qui est traversé par l'arbre 40 de la machine. Le guide 38 assure la transmission à la première paroi 36 du couple qui s'exerce sur les tôles 32 du stator.

L'arbre 40 présente une extrémité qui est supportée par des roulements 41 montés sur la première paroi 36.

L'autre extrémité de l'arbre 40 repose sur des roulements 44 solidaires d'une deuxième paroi d'extrémité 46 qui s'étend perpendiculairement à l'axe X et qui est supportée également par les longerons 37.

La poulie 20 comporte un moyeu 21 qui est fixé sur l'arbre 40 et qui tourne avec celui-ci et une partie périphérique 22 sur laquelle sont réalisées des gorges 23 destinées à recevoir chacune un câble C d'entraînement de l'ascenseur.

Des passages 24 sont réalisés dans l'exemple illustré entre la partie périphérique 22 et le moyeu 21 pour permettre une circulation d'air de refroidissement et alléger la poulie.

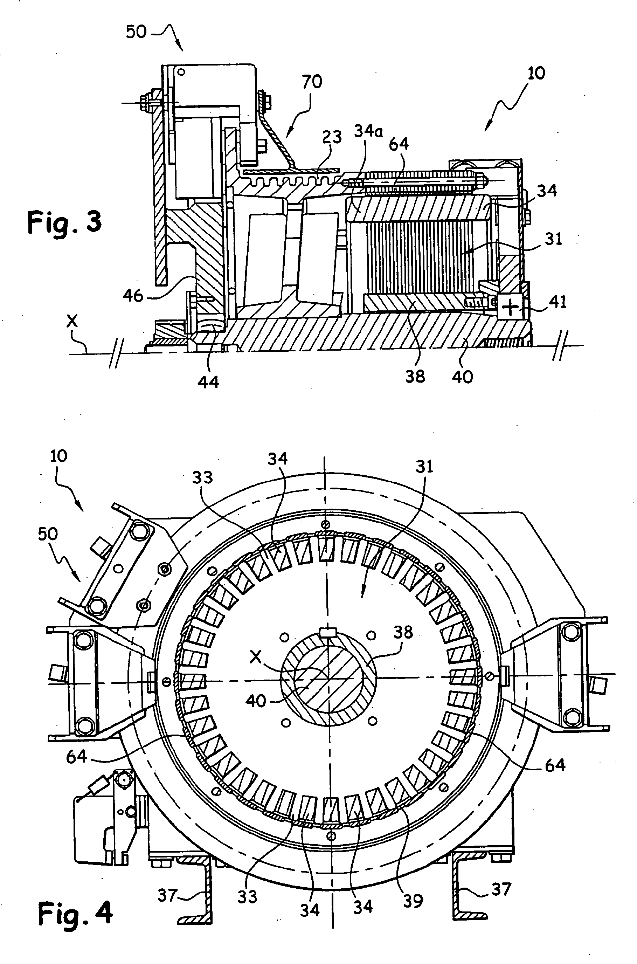

La poulie 20 est réalisée à une extrémité avec une couronne 25 destinée à coopérer avec les mâchoires d'un frein de parking 50 connu en lui-même, supporté par la deuxième paroi 46, comme on peut le voir plus particulièrement sur la figure 3.

La poulie 20 comporte, du côté opposé à la couronne 25, une partie d'extrémité 28 qui sert à la fixation du rotor 60.

Ce dernier comporte une enveloppe tubulaire 61 composée d'un paquet de tôles 62 maintenu en compression par des éléments de fixation 63 tels que des vis, fixés à une extrémité 66 dans la partie d'extrémité 28 de la poulie 20 et venant en appui à l'autre extrémité contre le paquet de tôles 62.

Le rotor 60 comporte également, sur sa surface radialement intérieure, une pluralité d'aimants permanents 64 disposés de manière à interagir avec le stator 31 de telle sorte que, lorsqu'un champ magnétique tournant est généré par ce dernier, le rotor 60 tende à être entraîné en rotation de manière synchrone autour de l'axe X.

Les aimants 64 peuvent être collés sur la surface intérieure, cylindrique de révolution, de l'enveloppe 61, étant disposés dans l'exemple considéré selon des rangées comportant chacune plusieurs aimants juxtaposés dans le sens de l'axe X, ces rangées étant espacées entre elles par des intervalles 39.

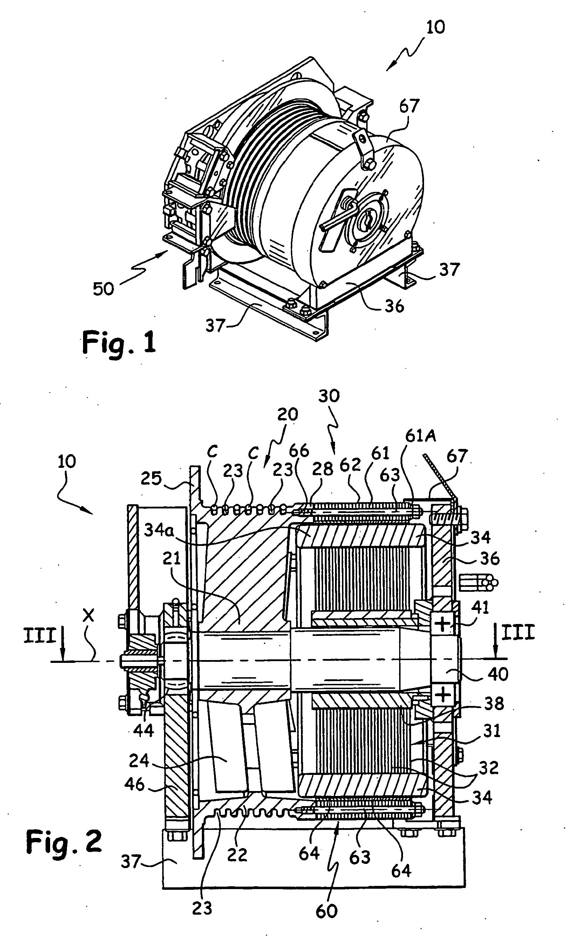

On voit sur les figures 2 et 3 que le rotor 60 est supporté uniquement par la poulie 20 et vient recouvrir les têtes 34a des bobinages 34 du stator sans recouvrir les dents 33.

La machine 10 peut comporter un protège-câble 70, comme illustré sur la figure 3.

La machine comporte avantageusement, comme illustré sur le dessin, un bandeau 67 recouvrant l'extrémité axiale libre 61a de l'enveloppe 61, ce bandeau 67 étant fixé sur la première paroi 36.

Bien entendu, l'invention n'est pas limitée à l'exemple qui vient d'être décrit.

En particulier, on peut réaliser la poulie avec un nombre différent de gorges, en fonction par exemple du type d'ascenseur à entraîner.

On peut remplacer, le cas échéant, le paquet de tôles du rotor par un matériau massif, l'enveloppe tubulaire du rotor étant éventuellement réalisée d'une seule pièce avec la poulie.

Dans toute la description, y compris les revendications, l'expression « comportant un » doit être comprise comme étant synonyme de « comportant au moins un », sauf si le contraire est spécifié.

## Revendications

1. Machine pour l'entraînement d'au moins un câble, notamment d'ascenseur, ayant :
- un moteur (30) comportant :
- un stator (31) bobiné sur dents,
- un rotor (60) pouvant tourner autour du stator, ce rotor comportant une enveloppe tubulaire (61) et des aimants permanents (64), et
- une poulie (20) accouplée au rotor et qui vient partiellement recouvrir le stator,
**caractérisée par le fait que**
- la machine comporte au moins un frein de parking (50), et
- la poulie est réalisée à une extrémité opposée au stator (31) avec une couronne (25) destinée à coopérer avec les mâchoires du frein (50).

2. Machine selon la revendication 1, **caractérisée par le fait que** la poulie (20) vient recouvrir les têtes (34a) des bobinages (34) du stator.

3. Machine selon la revendication 1 ou 2, **caractérisée par le fait que** l'enveloppe tubulaire (61) comporte un paquet de tôles (62) superposées.

4. Machine selon la revendication 3, **caractérisée par le fait que** le paquet de tôles (62) est maintenu en compression par des éléments de fixation (63) fixés dans la poulie.

5. Machine selon la revendication 4, **caractérisée par le fait que** la poulie (20) comporte une partie périphérique (22) sur laquelle sont réalisées des gorges (23) destinées à accueillir des câbles (C) et une partie (28) de réception des éléments de fixation (63), cette partie (28) étant réalisée d'une seule pièce avec la partie périphérique (22).

6. Machine selon la revendication 5, **caractérisée par le fait que** la partie (28) recouvre les têtes (34a) des bobinages (34) du stator sans recouvrir les dents (33) du stator.

7. Machine selon l'une quelconque des revendications précédentes, **caractérisée par le fait que** la poulie comporte des passages (24) permettant une circulation d'air à travers elle.

8. Machine selon l'une quelconque des revendications précédentes, **caractérisée par le fait qu'**elle comporte un bandeau (67) recouvrant une extrémité axiale libre (61a) du rotor, opposée à la poulie.

9. Machine selon l'une quelconque des revendications précédentes, **caractérisée par le fait qu'**elle ne comporte que deux roulements (41, 44) sur lesquels reposent les extrémités axiales d'un arbre du rotor.

10. Utilisation d'une machine telle que définie dans l'une quelconque des revendications précédentes pour l'entraînement d'un ascenseur.

## Claims

1. A machine for driving at least one cable, in articular an elevator cable, comprising:
- a motor (30) comprising:
- a stator (31) carrying a concentrated winding wound on teeth; and
- a rotor (60) capable of rotating about the stator, said rotor comprising a tubular casing (61) and permanent magnets (64) ; and
- a pulley (20) coupled to the rotor and partially overlying the stator.
- wherein the machine includes at least one parking brake (50), and
- wherein the pulley is made at an end remote from the stator with a ring (25) for co-operating with jaws of the brake (50).

2. A machine according to claim 1, wherein the pulley (20) overlies the heads (34a) of the stator windings (34).

3. A machine according to claim 1, wherein the tubular casing (61) comprises a stack of superposed laminations (62).

4. A machine according to claim 3, wherein the stack of laminations (62) is maintained in compression by fasteners (63) engaged in the pulley.

5. A machine according to claim 4, wherein the pulley (20) comprises a peripheral portion (22) having grooves (23) formed therein to receive cables (C), and a portion (28) for receiving the fasteners (63), said portion (28) being made integrally with the peripheral portion (22).

6. A machine according to claim 5, wherein the portion (28) covers the heads (34a) of the windings (34) of the stator without covering the teeth (33) of the stator.

7. A machine according to claim 1, wherein the pulley includes passages (24) enabling air to flow through the pulley.

8. A machine according to claim 1, including a strip covering a free axial end of the rotor remote from the pulley.

9. A machine according to claim 1, having only two bearings supporting the axial ends of a shaft of the rotor.

10. Use of a machine according to any preceding claims for driving an elevator.

## Patentansprüche

1. Maschine zum Antreiben mindestens eines Seils insbesondere von einem Aufzug, aufweisend:
einen Motor (30) mit
einem Stator (31), der auf Vorsprüngen bewickelt ist, sowie
einem Rotor (60), der sich um den Stator drehen kann und ein tubusartiges Gehäuse (61) sowie Permanentmagnete (64) aufweist, und
eine Rolle (20), die mit dem Rotor gekoppelt ist und den Stator teilweise bedeckt,
**dadurch gekennzeichnet, dass**
die Maschine mindestens eine Parkbremse (50) aufweist
und
die Rolle an einem dem Stator (31) gegenüberliegenden Ende mit einem Kranz (25) zum Zusammenwirken mit den Backen der Bremse (50) versehen ist.

2. Maschine nach Anspruch 1, **dadurch gekennzeichnet, dass** die Rolle (20) die Stirnseiten (34a) der Wicklungen (34) des Stators bedeckt.

3. Maschine nach Anspruch 1 oder 2, **dadurch gekennzeichnet, dass** das tubusartige Gehäuse (61) ein Paket gestapelter Bleche (62) umfasst.

4. Maschine nach Anspruch 3, **dadurch gekennzeichnet, dass** das Paket Bleche (62) durch Befestigungselemente (63) unter Druck gehalten wird, die in der Rolle befestigt sind.

5. Maschine nach Anspruch 4, **dadurch gekennzeichnet, dass** die Rolle (20) einen Umfangsbereich (22), auf dem Rillen (23) zur Aufnahme von Seilen (C) ausgebildet sind, und einen einstückig mit dem Umfangsbereich (22) ausgebildeten Bereich (28) zur Aufnahme von Befestigungselementen (63) umfasst.

6. Maschine nach Anspruch 5, **dadurch gekennzeichnet, dass** der genannte Bereich (28) die Stirnseiten (34a) der Wicklungen (34) des Stators ohne dessen Vorsprünge (33) bedeckt.

7. Maschine nach einem der vorhergehenden Ansprüche, **dadurch gekennzeichnet, dass** die Rolle Durchlässe (24) zur Zirkulation von Luft durch die Rolle umfasst.

8. Maschine nach einem der vorhergehenden Ansprüche, **gekennzeichnet durch** eine Blende (67), die ein der Rolle gegenüberliegendes freies axiales Ende (61a) des Rotors bedeckt.

9. Maschine nach einem der vorhergehenden Ansprüche, **dadurch gekennzeichnet, dass** sie lediglich zwei Lager (41, 44), auf denen die axialen Enden einer Welle des Rotors gelagert sind, aufweist.

10. Verwendung einer Maschine nach einem der vorhergehenden Ansprüche zum Antrieb eines Aufzugs.
